# EUROPEAN PATENT SPECIFICATION

(11) **EP 1 522 116 B1**
(45) Date of publication and mention of the grant of the patent: **20.02.2013**
(21) Application number: 02787281.1
(22) Date of filing: 20.12.2002
(51) Int. Cl.: H01M 10/0525, H01M 4/133, H01M 4/587, H01M 4/62

(54) **CARBON FIBRE CONTAINING NEGATIVE ELECTRODE FOR LITHIUM BATTERY**
KOHLEFASERHALTIGE NEGATIV-ELEKTRODE FÜR EINE LITHIUMBATTERIE
ELECTRODE NEGATIVE CONTENANT DES FIBRES DE CARBONE, DESTINEE A UN ACCUMULATEUR AU LITHIUM

(30) Priority: 08.02.2002 US 67905
(43) Date of publication of application: 13.04.2005
(73) Proprietor: Electrovaya Inc., Mississauga, Ontario L5J 1K9 (CA)
(72) Inventor: DASGUPTA, Sankar, c/o Electrovaya, Mississauga, Ontario L5J 1K9 (CA); BHOLA, Rakesh, Toronto, Ontario M6M 1L1 (CA); JACOBS, James, K., Toronto, Ontario M5R 3C2 (CA)
(74) Representative: Wallace, Stuart
(86) International application number: PCT/CA2002/001990
(87) International publication number: WO 2003/067699

(56) References cited:
- WO-A-00/51936
- WO-A-01/15251
- KR-A- 2003 006 746
- US-A- 5 879 836
- PATENT ABSTRACTS OF JAPAN vol. 2000, no. 01, 31 January 2000 (2000-01-31) & JP 11 283629 A (JAPAN STORAGE BATTERY CO LTD), 15 October 1999 (1999-10-15)
- PATENT ABSTRACTS OF JAPAN vol. 2000, no. 26, 1 July 2002 (2002-07-01) & JP 2001 266873 A (HITACHI MAXELL LTD), 28 September 2001 (2001-09-28)

## Description

### FIELD OF THE INVENTION

This invention relates to electrode structures for lithium batteries and more specifically to carbon-based substrates used in anodes for such batteries.

### BACKGROUND OF THE INVENTION.

Although an anode for a lithium battery can be elemental lithium, current practice is favouring the use of a material capable of intercalating elemental lithium in its inert structure, such as graphite. The anode material is coated on metal foil, normally copper, which acts as a current collector, is placed in the proximity of a cathode and the electrodes are separated by some form of electrolyte. The cathode is typically a transition metal oxide mixed with fine carbon particles and a binder.

A separator layer of an inert polymer permeable to lithium ions or lithium ions containing non-aqueous liquids is placed between the anode and the cathode to prevent their physical contact. The assemblies are soaked or wetted by a lithium ion containing organic liquid electrolyte, such as LiPF₆ in di-methyl or methylethyl carbonate, and sealed in plastic wrapping to prevent moisture entering the lithium electrochemical cell. The electrolyte may also be a solid, lithium ion conducting polymer layer.

For the carbon particles to intercalate reversibly lithium ions from the electrolyte solution, the carbon must have a particular lattice spacing and be exposed to the electrolyte solution. Graphitic carbon satisfies the lattice spacing requirement, but in its pure form generally will not achieve its theoretical capacity to intercalate lithium ions. It is believed that one cause of this might be the plate-like nature of pure graphite causing bridging and resulting in closed voids which are inaccessible to the electrolyte solution.

Much better results in terms of charge capacity have been observed with the use of what is referred to as "meso-phase" graphite in the anode composition for rechargeable lithium ion batteries. It is believed that as meso-phase graphites are less plate-like and more spheroidal than elemental graphite, they are less prone to forming inaccessible voids than the latter.

Despite advances in rechargeable lithium ion battery technology, there remains a need for such batteries which are better suited to pulsed current demands and improved cycle life capacity. The cycle life capacity is basically a measure of the battery's capacity after charging for repeated charge/discharge cycles. Typically, the capacity diminishes with each charging until a point is reached where the amount of charge becomes insufficient for the battery to provide current for a desired period of time. Presumably the decay in capacity is a reflection of an inability of the graphite to intercalate as many lithium ions as in previous charges. This may be due to breakdown products of the electrolyte blocking or deactivating the active sites of the graphite or to similar disadvantageous side reactions.

For the sake of clarity, it should be pointed out that it is known to add carbon particles to augment electrical conduction in the cathode or positive electrode. The cathode is usually made of particles of a lithium containing transition metal oxide or sulphide compound, incorporating fine, non-crystalline, conductive, carbon particles. Such carbon particles would typically be smaller particles or non-crystalline fibres. The cathode however contains on an amorphous carbon structure which is not capable of intercalating lithium. The present invention involves, as discussed in more detail below the addition of nanometer sized carbon tubes or fibres to the anode in order to enhance cycle life and rate capacity, particularly for pulsed current.

It should further be pointed out that it is known to manufacture the anode of a lithium battery entirely from a carbon fibre or nano-fibre material as evidenced by US Patent No. 5,879,836 (Ikeda et al.) and US Patent No. 5,856,043 (Ohsaki et al.). The teachings of the foregoing patents are distinguishable from the present invention in that the anode structure of the present invention is substantially of a pressed compact spherical graphite containing less than 15% by weight of carbon nano-fibres in the pressed compact.

Additionally, US Patent No. 5,512,393 (Harada et al.) teaches the use of vapour-grown and graphitized non-tubular carbon fibres in an anode however such is used for the entire carbon component of the anode. Furthermore, the dimensions of the fibres are of micron rather than of nanometer size.

The foregoing references teach carbon fibres or nano-fibres as an alternative to conventional spherical graphite anodes and make no suggestion as to how a relatively small addition of carbon nano-fibres may greatly enhance the performance characteristics of an anode which is principally of spherical graphite powder. Other prior art solution may be found in KR 2003 006 746A, WO 01/15251A, WO 00/519 36A, JP 11 2836294 and JP 2001 266873A.

### SUMMARY OF THE INVENTION

The invention basically comprises the addition of a small amount of nanometer sized carbon tubes or fibres grown by high temperature vapour deposition, to a graphite mixture such as a spherical graphite containing mixture, used for a negative electrode (anode) for a lithium battery. These are referred to herein as "carbon nano-fibres".

According to the present invention, in an anode for a lithium battery having a conductive substrate coated with a pressed compact of spherical graphite and an ion-conducting polymeric binder, an amount of from 1.5 to 15% by weight of carbon nano-fibres is added.

The carbon nano-fibres may have an average diameter of around 0.2µm (200 x 10⁻⁹m), length of from 10 to 20µm and, inner core diameter of from 50-80nm. This corresponds to an aspect ratio of from 50 to 100. The spherical graphite may be meso-phase graphite and more preferably, the carbon nano-fibres are included in amount of from 2 to 9% by weight.

The nano-fibres may be subject to vacuum at a heat treating temperature prior to or after mixing with the spherical graphite.

According to the present invention, the nano-fibres are heat and vacuum treated prior to mixing with the meso-phase carbon, the heat treating temperature is from 40°C to 140°C.

According to another embodiment of the invention, the heat and vacuum treating may be carried out after preparation of the mixture of carbon fibres, meso-phrase carbon particles, ionic binder and wetting of the mixture with lithium ion containing solution. According to this embodiment, the heat treating temperature may be from 45°C to 80°C.

The vacuum may be less than 10 torr.

The duration of heat and vacuum treatment may be from 2 to 8 hours.

### DESCRIPTION OF DRAWINGS

Preferred embodiments of the present invention are described below with reference to the accompanying drawings in which:
Figure 1 is a scanning electron micrograph ("SEM") picture of vapour grown carbon fibres of the type used in the present invention;
Figure 2 is a scanning electron micrograph picture corresponding to Figure 1 but at a different magnification; and,
Figure 3 is a graph illustrating the improved cycle-life of a rechargeable lithium battery made in accordance with the present invention.

### DETAILED DESCRIPTION OF THE INVENTION

According to the present invention, a negative electrode (anode) for a lithium battery is produced by combining a mixture of approximately 95% by weight graphite and 5% by weight ion-conducting polymeric binder to form a coating which is subsequently applied to a current collector, such as copper foil. The graphite is preferably a spherical graphite such as mesocarbon microbeads to which an amount of about 1.5% to about 15% of carbon nano-fibres has been added. The graphite/binder mixture is compressed into a pressed compact with copper foil on one side and a suitable separator on the other side. The separator, as described in the background above is preferably an inert polymer permeable to lithium ions or lithium ion containing non-aqueous liquids.

Suitable results have been obtained using commercially available carbon nano-fibres, such as for example, VGCF-G (Vapour Grown Carbon Fibres) marketed by the Showa Denko Company, which are pretreated nanometer-sized carbon tubes or fibres grown by high temperature vapour deposition. Such have an average diameter of the order of 200nm (0.2µm or 200 x 10⁻⁹m), an elongated structure with an average length of from 10 to 20µm and an inner core diameter of from 65-70nm.

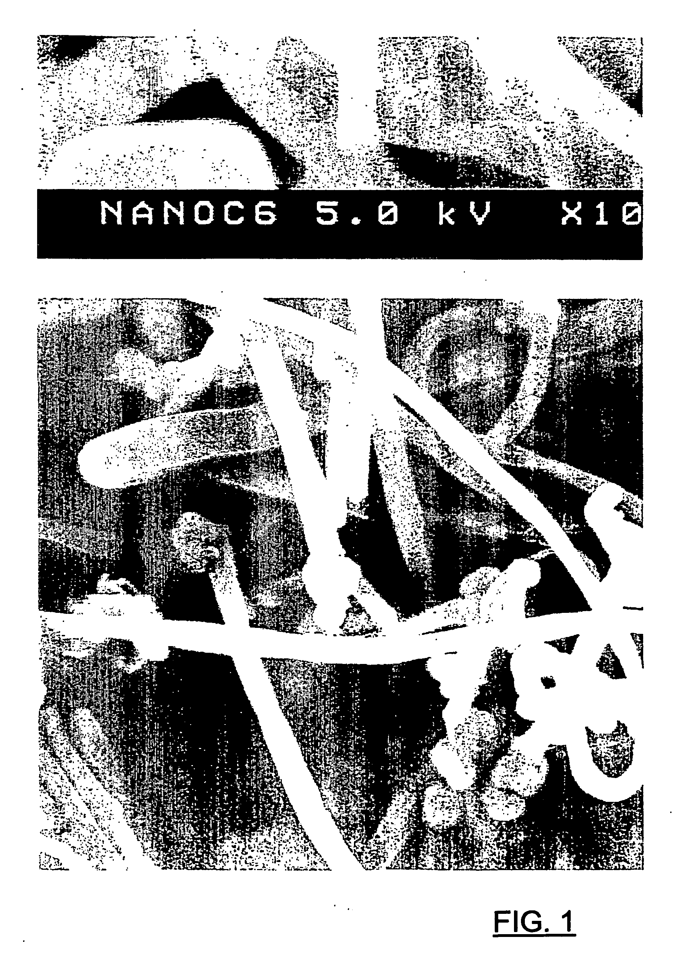

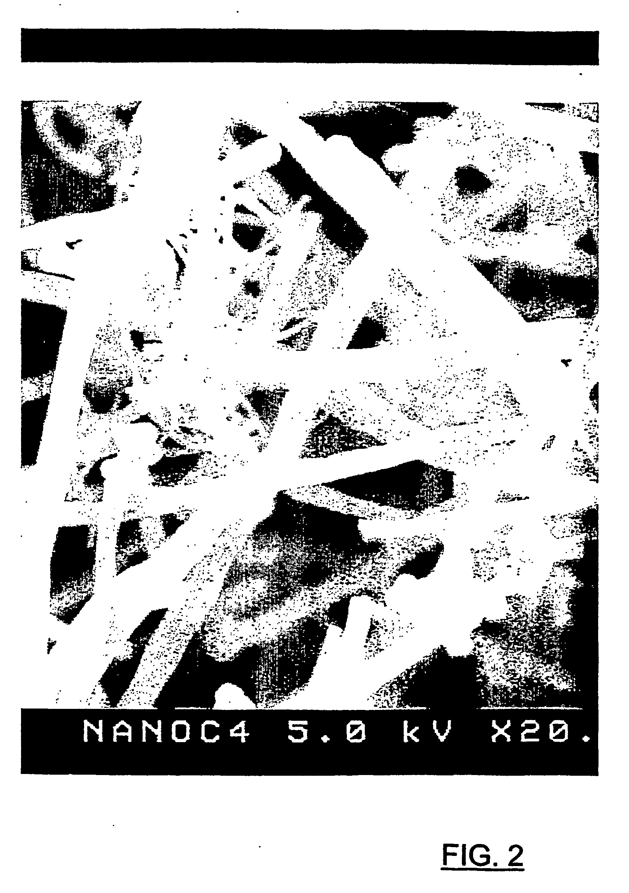

Figures 1 and 2 are SEM (scanning electron micrograph) pictures of typical vapour grown carbon fibres. Figure 1 indicates 0.3µm (300nm) scale. Figure 2 indicates a 1.5µm scale.

In the preferred embodiment, the carbon nano-fibres are treated in vacuum at temperatures above 40°C and mixed with commercially available graphitic mesophase carbon micro-balls (MCMB) and binders in a conventional manner. The preferred amount of carbon nano-fibres in the anode mixture ranges between 1.5-15% by weight, the more preferred amount being 2-9% by weight. Cost considerations currently favour a range of between 2-2.5% by weight on account of what is presently a very high cost of this material.

Use of the above mixture in an anode for a lithium battery has been found to yield an initial impedence similar to that without the addition of the carbon nano-fibres, however drastic cycle life increases are possible. Furthermore rate capacity, particularly for pulsed current, is much better. It has further been found that if the carbon nano-fibres are heated in a partial vacuum at heat treatment temperatures of from 40°C to 140°C, prior to mixing with the graphitic MCMB for from 2 to 8 hours (depending on the selected temperature of the treatment), further significant cycle life increases are obtainable. The vacuum applied may be less than about 10 torr and preferably about 1 torr (1mm of Hg).

Alternatively, the graphitic MCMB and ionic binder may be premixed and wetted with the lithium ion containing electrolyte solution, and subsequently heat and vacuum treated. In this case, the maximum heat treatment temperature should not exceed 80°C in order to avoid damage to any organic constituents and the present preferred range is from 45°C to 80°C. The duration of treatment may be from 2 to 8 hours depending on the selected temperature of the treatment.

The invention is further illustrated by reference to the examples below.

### Example 1

Nano-sized carbon fibrils, marketed as VGCF-G by the Showa Denko Company, were heated in a vacuum for. 3 hours at 125°C, and subsequently allowed to cool in vacuum. The treated nano-carbon fibrils were added to commercially available graphitic mesophase carbon micro-balls (MCMB) in 2.5 wt.% and additionally mixed with an ionically conductive polyvinylidene fluoride binder, marketed under the trade-name of Kynar, in. 5 wt%. The mixture obtained was spread over copper foil in 200µm thickness for use as negative electrode (anode) in a rechargeable lithium electrochemical cell. The lithium electrochemical cell having the above anode, further included a microporous polyethylene separator marketed by the Tonen Co. under the name of 'Setella', and a cathode or positive electrode, containing lithium-maganese oxide particles carried on an aluminum foil current collector. The assembled electrochemical cell was subsequently impregnated with ethylene carbonate-dimethyl carbonate electrolyte containing LiPF₆ in 1 M concentration, and sealed in a multi-layered protective polymer wrapping in the usual manner.

### Example 2

Nano-sized carbon fibrils, marketed as VGCF-G by the Showa Dekko Company, were added to commercially available graphitic mesophase carbon micro-balls (MCMB) in 3 wt% and additionally mixed with an ionically conductive polyvinylidene fluoride binder, marketed under the trade name of Kynar, in 5 wt%. The above mixture was wetted with a small amount of ethylene carbonate-dimethyl carbonate electrolyte containing LiPF₆ in 1 M concentration, and further mixed to yield an anode paste. The obtained paste was subsequently heated in a vacuum of 5 torr for 6 hours at 55°C, and subsequently allowed to cool in vacuum. The mixture obtained was spread over copper foil in 200µm thickness for use as negative electrode (anode) in a rechargeable lithium electrochemical cell. The lithium electrochemical cell having the above anode additionally included a microporous polyethylene separator marketed by the Tonen Co. under the name of 'Setella' and a cathode or positive electrode, containing lithium-maganese oxide particles carried on an aluminum foil current collector. The assembled electrochemical cell was subsequently impregnated with ethylene carbonate-dimethyl carbonate electrolyte containing LiPF₆ in 1 M concentration, and sealed in a multi-layered protective polymer wrapping in the usual manner.

### Example 3

Nano-sized carbon fibrils, marketed as VGCF-G by the Showa Denko Company, were added to commercially available graphitic mesophase carbon micro-balls (MCMB) in 3 wt.% and additionally mixed with an ionically conductive polyvinylidene fluoride binder, marketed under the trade name of Kynar, in 5 wt%. The above mixture was wetted with a small amount of ethylene carbonate-dimethyl carbonate electrolyte containing LiPF₆ in 1 M concentration, and further mixed to yield an anode paste. The obtained paste was subsequently heated in a vacuum of 3 torr for 4 hours at 65°C, and subsequently allowed to cool in vacuum. The mixture obtained was spread over copper foil in 200µm thickness for use as negative electrode (anode) in a rechargeable lithium electrochemical cell. The lithium electrochemical cell having the above anode additionally included a microporous polyethylene separator marketed by the Tonen Co. under the name of 'Setella' and a cathode or positive electrode, containing lithium-cobalt oxide particles carried on an aluminum foil current collector. The assembled electrochemical cell was subsequently impregnated with ethylene carbonate-dimethyl carbonate electrolyte containing LiPF₆ in 1 M concentration, and sealed in a multi-layered protective polymer wrapping in the usual manner.

### Example 4

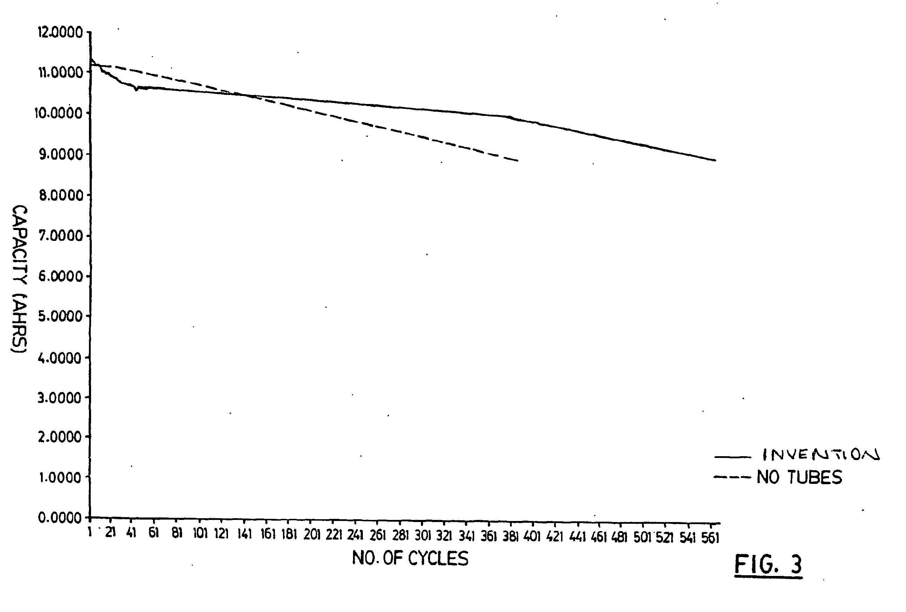

Rechargeable lithium batteries having carbon nano-fibril containing anodes and assembled as described in Example 3 were compared in performance to conventional graphite anode containing rechargeable lithium batteries. The lithium batteries tested were first charged to 4.2 volt at 1.75 ampere current to reach 3.0 volt. The lithium battery capacity in ampere hours (A/hrs) was plotted against the number of charging-discharging cycles attained, and the obtained graph is shown on Figure 3. It can be seen that the performance of the nano-fibril (nano-tubes) bearing lithium battery notably out-performs the conventionally made lithium battery.

## Claims

1. An anode for a lithium battery having a conductive substrate coated with a pressed mixture of spherical graphite and an ion conducting polymeric binder **characterised by** the inclusion of up to from 1.5 to 15% by weight of vapour grown carbon nano-fibres in said pressed mixture, wherein said vapour grown nano-fibres have been heated in a partial vacuum to heat treatment temperatures of from 40° to 140° C for a period of from 2 to 8 hours prior to mixing with said spherical graphite or wherein said vapour grown nano-fibres and spherical graphite mixture has been heated in a partial vacuum at temperatures of from 45° to 80° C for a period of from 2 to 8 hours after mixing with said spherical graphite.

2. The anode of claim 1 wherein said spherical graphite is meso-phase carbon micro-balls;
said vapour grown carbon nano-fibres have an average diameter of about 200nm, a length of from 10 to 20µm and an inner core diameter of 65 to 70nm.

3. The anode of claims 1 or 2 wherein said vapour grown carbon nano-fibres are included in an amount of from 2% to 9% by weight.

4. The anode of any preceding claim wherein said conductive substrate is copper foil.

5. A non-aqueous lithium battery comprising the anode as claimed in any one of the preceding claims.

## Patentansprüche

1. Eine Anode für eine Lithiumbatterie, die ein leitfähiges Substrat aufweist, das mit einer gepressten Mischung aus kugelförmigem Graphit und einem Ionen leitenden Polymerbindemittel beschichtet ist, **gekennzeichnet durch** das Einschließen von bis zu von 1,5 bis 15 Gew.-% dampfgewachsene Kohlenstoffnanofasern in der gepressten Mischung, wobei die dampfgewachsenen Nanofasern vor dem Mischen mit dem kugelförmigen Graphit über eine Zeitspanne von von 2 bis 8 Stunden in einem Teilvakuum auf Wärmebehandlungstemperaturen von von 40 °C bis 140 °C erwärmt worden sind oder wobei die Mischung aus dampfgewachsenen Nanofasern und kugelförmigem Graphit nach dem Mischen mit dem kugelförmigen Graphit über eine Zeitspanne von von 2 bis 8 Stunden in einem Teilvakuum bei Temperaturen von von 45 °C bis 80 °C erwärmt worden ist.

2. Anode gemäß Anspruch 1, wobei der kugelförmige Graphit Mesophasen-Kohlenstoffmikrokugeln ist;
wobei die dampfgewachsenen Kohlenstoffnanofasern einen durchschnittlichen Durchmesser von etwa 200 nm, eine Länge von von 10 bis 20 µm und einen Durchmesser des inneren Kerns von 65 bis 70 nm aufweisen.

3. Anode gemäß den Ansprüchen 1 oder 2, wobei die dampfgewachsenen Kohlenstoffnanofasern in einer Menge von von 2 bis 9 Gew.-% eingeschlossen sind.

4. Anode gemäß einem der vorhergehenden Ansprüche, wobei das leitende Substrat eine Kupferfolie ist.

5. Eine nicht wässrige Lithiumbatterie, die die Anode gemäß einem der vorhergehenden Ansprüche beinhaltet.

## Revendications

1. Une anode pour une batterie au lithium ayant un substrat conducteur revêtu d'un mélange pressé de graphite sphérique et d'un liant polymère conducteur d'ions **caractérisée par** l'inclusion de jusqu'à 1,5 à 15 % en poids de nanofibres de carbone obtenues par croissance en phase vapeur dans ledit mélange pressé, dans laquelle lesdites nanofibres obtenues par croissance en phase vapeur ont été chauffées sous vide partiel jusqu'à des températures de traitement thermique allant de 40° à 140 °C pendant une période allant de 2 à 8 heures préalablement au mélange avec ledit graphite sphérique ou dans laquelle ledit mélange de nanofibres obtenues par croissance en phase vapeur et de graphite sphérique a été chauffé sous vide partiel à des températures allant de 45° à 80 °C pendant une période allant de 2 à 8 heures après le mélange avec ledit graphite sphérique.

2. L'anode de la revendication 1 dans laquelle ledit graphite sphérique consiste en des microbilles de carbone mésophase ;
lesdites nanofibres de carbone obtenues par croissance en phase vapeur ont un diamètre moyen d'environ 200 nm, une longueur allant de 10 à 20 µm et un diamètre de coeur interne de 65 à 70 nm.

3. L'anode des revendications 1 ou 2 dans laquelle lesdites nanofibres de carbone obtenues par croissance en phase vapeur sont incluses dans une quantité allant de 2 % à 9 % en poids.

4. L'anode de n'importe quelle revendication précédente dans laquelle ledit substrat conducteur est de la feuille de cuivre.

5. Une batterie au lithium non aqueuse comprenant l'anode telle que revendiquée dans une quelconque des revendications précédentes.
